(19) **Europäisches Patentamt**

**European Patent Office**

**Office européen des brevets**

(11) Veröffentlichungsnummer: **0 220 378**

**A1**

(12) # EUROPÄISCHE PATENTANMELDUNG

(21) Anmeldenummer: **86108902.7**

(22) Anmeldetag: **01.07.86**

(51) Int. Cl.⁴: **G01P 3/50**

(30) Priorität: **01.10.85 DE 3534950**
     **10.06.86 DE 3619498**

(43) Veröffentlichungstag der Anmeldung:
     **06.05.87 Patentblatt 87/19**

(84) Benannte Vertragsstaaten:
     **DE FR GB NL**

(71) Anmelder: **Standard Elektrik Lorenz**
     **Aktiengesellschaft**
     **Lorenzstrasse 10**
     **D-7000 Stuttgart 40(DE)**

(72) Erfinder: **Böhm, Manfred**
     **Solitudestrasse 389**
     **D-7000 Stuttgart 31(DE)**

(74) Vertreter: **Schmidt, Werner, Dipl.-Phys. et al**
     **c/o Standard Elektrik Lorenz AG Patent- und**
     **Lizenzwesen Kurze Strasse 8 Postfach 300**
     **929**
     **D-7000 Stuttgart 30(DE)**

(54) **Geschwindigkeitsmesseinrichtung.**

(57) Aus einem Lichtstrahl werden zwei Teilstrahlen erzeugt und in die Interferometerarme eines Interferometers eingekoppelt. Die Interferometerarme können zueinander parallel sein. Bei paralleler Anordnung müssen sie unterschiedlich lang sein. Nach dem Durchlaufen der Interferometerarme werden die beiden Teilstrahlen einander überlagert. Aus der Phasendifferenz zwischen den beiden Teilstrahlen, welche durch den quadratischen Doppler-Effekt bedingt ist, wird die inertiale Geschwindigkeit ermittelt. Bei einem weiteren Ausführungsbeispiel weist ein Gaslaser zwei Resonatorräume (100, 104; 107, 109) auf, die unterschiedlich lang sind. Sie sind zueinander parallel. Der Gaslaser erzeugt im Ruhezustand Laserstrahlen mit den Frequenzen $f_1$ und $f_2$. Bei einer Bewegung in der Richtung, in die die Resonatorräume zeigen, ändern sich die Frequenzen und werden $f_1'$, $f_2'$ und zwar jeweils um unterschiedliche Beträge. Aus $\Delta f' = f_2' - f_1'$ wird die Geschwindigkeit in der Richtung, in die die Resonatorräume zeigen, ermittelt.

EP 0 220 378 A1

FIG.1

## Geschwindigkeitsmeßeinrichtung

Die Erfindung betrifft eine Geschwindigkeitsmeßeinrichtung.

Es gibt zahlreiche bekannte Geschwindigkeitsmeßeinrichtungen, die nach unterschiedlichen Prinzipien arbeiten. Fast alle dieser Geschwindigkeitsmeßeinrichtungen dienen dazu, die Geschwindigkeit relativ zu einem Bezugssystem -das ist meist die Erdoberfläche -zu messen. Hierzu ist es üblich, die Geschwindigkeit aus Abstandsänderungen pro Zeiteinheit zu berechnen oder sie direkt aus Größen, die zu der Relativbewegung proportional sind, zu ermitteln. Solche proportionale Größen sind beispielsweise die Dopplerverschiebung einer Frequenz oder die Drehzahl eines Rades.

Aus der DE-OS 33 35 708 ist eine Geschwindigkeitsmeßeinrichtung bekannt, die die Messung der absoluten Geschwindigkeit ermöglicht. Die absolute Geschwindigkeit kann auch als inertiale Geschwindigkeit bezeichnet werden. Die Messungen erfolgen im Gravitationsfeld der Sonne, welches das Bezugsmedium ist. Daraus ergibt sich, daß die Geschwindigkeit in einem Koordinatengitter gemessen wird, bei dem die Sonne sich im Koordinatenursprung befindet. Die gemessene inertiale Geschwindigkeit ist also die Geschwindigkeit bezogen auf den Ort der Sonne. Da die Bahnen der um die Sonne kreisenden Planeten genau bekannt sind, kann aus der inertialen Geschwindigkeit und den Bahndaten der Planeten die relative Geschwindigkeit in Bezug auf diese Planeten berechnet werden; also auch in Bezug auf die Erde. Verläßt die Geschwindigkeitsmeßeinrichtung das Gravitationsfeld der Sonne und gelangt sie in das Gravitationsfeld eines anderen Bezugssystems, dann ist die Sonne durch das andere Bezugssystem zu ersetzen.

Eine solche Geschwindigkeitsmeßeinrichtung eignet sich insbesondere zur Verwendung bei der Inertialnavigation. Dann ist es nämlich nicht erforderlich, zusätzlich zur Geschwindigkeitsmessung die Drehgeschwindigkeit und die Beschleunigung zu messen.

Bei der aus der DE-OS 33 35 708 bekannten Geschwindigkeitsmeßeinrichtung wird davon Gebrauch gemacht, daß für Meß-und Referenzsignal, die sich auf unterschiedlichen Wegen ausbreiten, unterschiedliche Mitführungskoeffizienten wirksam werden. Unterschiedliche Mitführungskoeffizienten sind beispielsweise bei der folgenden Realisierungsmöglichkeit vorhanden: Meß-und Referenzsignal sind Lichtstrahlen; beide breiten sich in Lichtleitfasern aus; die Lichtleitfasern für Meß-und Referenzsignal haben voneinander unterschiedliche Brechungsindice. Bei einer solchen Realisierung ist die geschwindigkeitsabhängige Phasendifferenz zwischen Meß-und Referenzsignal nach dem Durchlaufen der jeweiligen Lichtleitfaser proportional zu $(n_1^2 - n_2^2)$ l; ($n_1$, $n_2$: Brechungsindice der Lichtleitfasern, l:Länge der beiden Lichtleitfasern).

Um auf engem Raum eine große Wegstrecke realisieren zu können, ist es aus der genannten Anmeldung bekannt, mehrere zueinander parallel angeordnete Lichtleitfaserstücke vorzusehen, die an ihren Enden jeweils mit Spiegeln, die eine Spiegelplatte bilden, abgeschlossen sind.

Aufgabe der Erfindung ist es, eine weitere Lösung zur Messung der inertialen Geschwindigkeit anzugeben.

Gegenüber der aus der DE-OS 33 35 708 bekannten Lösung haben die neuen Lösungen gemäß den Ansprüchen 1, 2 oder 9 und deren Weiterbildungen den Vorteil, daß für die Wegstrecken, auf denen sich Meß-und Referenzsignal ausbreiten, keine unterschiedlichen Materialien verwendet werden müssen.

Die Erfindung wird anhand der Zeichnungen beispielsweise näher erläutert. Es zeigt:

Fig. 1 eine schematische Darstellung zur Erläuterung der Funktionsweise der Geschwindigkeitsmeßeinrichtung, und

Fig. 2 bis 5 Ausführungsbeispiele

Bevor auf die Ausführungsbeispiele näher eingegangen wird zunächst einige allgemeine Ausführungen.

Wenn sich in einer Meßeinrichtung mit einem Signalsender und einem Signalempfänger der Abstand zwischen diesen beiden nicht zeitabhängig ändert sondern konstant bleibt, entsteht nach gängiger Ansicht kein Doppler-Effekt in bezug auf die vom Sender zum Empfänger gelangenden Signale. Dies soll auch dann der Fall sein, wenn sich diese Meßeinrichtung in einem beliebigen Medium (einschließlich Vakuum) mit einer Geschwindigkeit v bewegt. Dies hätte zur Folge, daß eine Geschwindigkeit nur dann gemessen werden könnte, wenn Sender und Empfänger nicht starr miteinander verbunden sind oder wenn das vom Sender abgegebene Signal an einem Gegenstand reflektiert wird, bevor es zum Sender gelangt.

Bei den dieser Ansicht zugrundeliegenden Überlegungen wird der Doppler-Effekt zweiter Ordnung außer Acht gelassen. Gerade dieser Doppler-Effekt zweiter Ordnung wird bei der neuen Geschwindigkeitsmeßeinrichtung zur Geschwindigkeitsmessung ausgenützt. Der Doppler-Effekt zweiter Ordnung (auch quadratischer Doppler-Effekt genannt) reduziert scheinbar die Ausbreitungsgeschwindigkeit W eines Signals im Medium um den Faktor

$$\frac{v^2}{w_0^2} \qquad , \text{ d. h. auf den Wert} \qquad w = w_0 \left(1 - \frac{v^2}{w_0^2}\right)$$

mit $w_0$ gleich Ausbreitungsgeschwindigkeit des Signals, wenn die Meßeinrichtung in Ruhe ist, und

mit $v$ gleich Geschwindigkeit der Meßeinrichtung im Medium.

In Wirklichkeit verlängert sich die Länge $l_0$ auf

$$\frac{l_0}{1 - \frac{v^2}{w^2}} .$$

Daraus ergibt sich, daß bei Messungen innerhalb einer im Medium bewegten Meßeinrichtung (d. h. bei mitbewegten "Beobachter"; Beobachter gleich Empfänger) die Relativgeschwindigkeit des vom Sender zum Empfänger laufenden Signals grundsätzlich kleiner ist als die Ausbreitungsgeschwindigkeit $w_0$ des Signals im Medium im Ruhezustand.

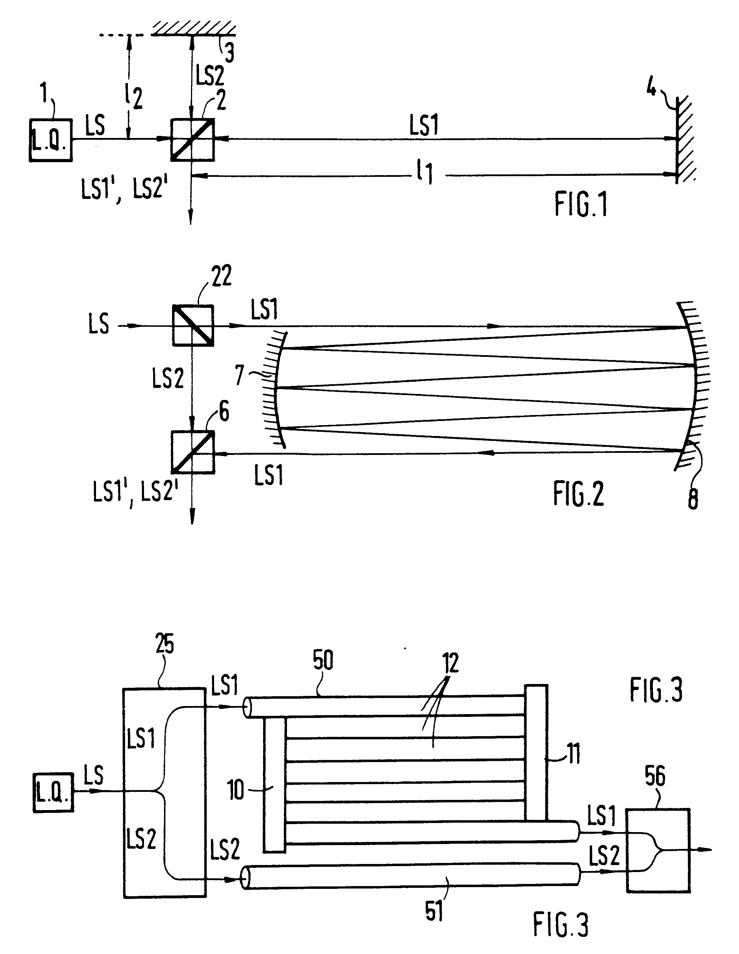

Die Anordnung nach Fig. 1 ist eine Interferometer-Anordnung entsprechend dem Experiment, das von Kennedy und Thorndike durchgeführt wurde (R.J.Kennedy, E.M. Thorndike, Experimental Establishment of the Relativity of Time, Physical Review, Vol. 42, Nov. 1, 1932). Dieses Experiment geht aus von dem allgemein bekannten Michelson-Interferometer (z.B. G.Joos, Lehrbuch der theoretischen Physik, 11. Auflage, Akademische Verlagsgesellschaft, Frankfurt/M., 1965, S. 223-226). Im Vergleich zum Michelson-Interferometer ist es beim Kennedy-Thorndike-Interferometer wichtig, daß die beiden Interferometer-Arme entweder nicht gleich lang sind oder daß sie (wenn sie gleich lang sind) nicht zueinander orthogonal oder parallel ausgerichtet sind. Wenn $l_1$ und $l_2$ die Längen der Interferometerarme sind, dann ergeben sich folgende Realisierungsmöglichkeiten

a1) $l_1 \neq l_2$; Interferometerarme sind zueinander orthogonal,

a2) $l_1 \neq l_2$ Interferometerarme schließen einen beliebigen Winkel ein,

a3) $l_1 \neq l_2$ Interferometerarme sind zueinander parallel, und

b) $l_1 = l_2$; Interferometerarme schließen einen Winkel $\neq 90°$ oder ganzzahlige Vielfache hiervon (also auch $\neq 0°$) ein.

Für die Erläuterung der Funktionsweise wurde in der Fig. 1 die Anordnung a1) gewählt (ebenso bei der Fig. 2; bei Fig. 3 ist die Anordnung gemäß a3) gewählt).

Eine Lichtquelle 1 gibt einen Lichtstrahl LS ab. Dieser trifft auf einen Strahlteiler 2, der den Lichtstrahl LS in zwei Teilstrahlen LS1 und LS2 aufteilt. Der erste Teilstrahl LS1 trifft auf einen Spiegel 4 und wird von diesem zu dem Strahlteiler 2 zurückreflektiert (erster Interferometerarm). Die Länge des ersten Interferometerarms ist $l_1$. Der zweite Teilstrahl LS2 trifft auf einen Spiegel 3 und wird von diesem zu dem Strahlteiler 2 zurückreflektiert (zweiter Interferometerarm). Die Länge des zweiten Interferometerarms ist $l_2$. Die beiden Interferometerarme stehen aufeinander senkrecht. Teile LS1', LS2' der beiden von den Spiegeln reflektierten Teilstrahlen LS1 und LS2 werden im Strahlteiler 2 einander überlagert und gelangen anschließend zu einer nicht dargestellten Auswerteeinrichtung.

In der Auswerteeinrichtung wird in an sich bekannter Weise die Phasendifferenz zwischen den beiden Teilstrahlen LS1 und LS2' ermittelt. Statt der Messung der Phasendifferenz ist es auch möglich, in an sich bekannter Weise die Differenz der Ankunftszeiten zwischen den beiden Teilstrahlen zu ermitteln. Welche Größe gemessen wird ist grundsätzlich ohne Bedeutung, da die Differenz der Ankunftszeiten $\Delta t$ direkt proportional zur Phasendifferenz $\Delta \phi$ ist. Bei der Auswertung der Phasendifferenz muß lediglich darauf geachtet werden, daß das Meßergebnis nicht mehrdeutig ist.

Bei der Anordnung nach Fig. 1 ist

$$\Delta \phi = \frac{4\pi}{\lambda} \frac{(l_1 - l_2)}{(1 - \frac{v^2}{c^2})}$$

mit c gleich Ausbreitungsgeschwindigkeit des Lichtstrahls im Vakuum. v ist die Geschwindigkeit, mit der sich die Geschwindigkeitsmeßeinrichtung in der Richtung bewegt, in der sich der Teilstrahl LS1 im ersten Interferometerarm ausbreitet. Aus dem für $\Delta \phi$ gemessenen Wert kann v berechnet werden.

Stehen die beiden Interferometerarme für LS1 und LS2 nicht aufeinander senkrecht, dann muß bei der obigen Gleichung der Winkel zwischen den beiden Interferometerarmen berücksichtigt werden.

Bei der Anordnung nach Fig. 2 wird wiederum der Lichtstrahl LS durch einen Strahlteiler 22 in zwei Teilstrahlen LS1 und LS2 aufgeteilt. Im Gegensatz zur Anordnung nach Fig. 1 wird jedoch der Teilstrahl LS1 nicht von einem Spiegel direkt zu dem Strahlteiler 22 zurückreflektiert, sondern er wird zwischen zwei Spiegeln 8 und 7 mehrmals hin-und herreflektiert und gelangt dann schließlich von dem Spiegel 8 zu einem weiteren Strahlteiler 6, in dem ein Teil LS1' des Teilstrahls LS1 einem Teil LS2' des Teilstrahls LS2 überlagert wird. Der in dem Strahlteiler 6 durch die Überlagerung erzeugte Lichtstrahl gelangt zu der Auswerteeinrichtung. Gegenüber der Anordnung nach Fig. 1 wurde bei der Anordnung nach Fig. 2 die Wegstrecke $l_1$, d. h. die Wegstrecke zwischen dem Punkt, an dem aus einem Lichtstrahl zwei Teilstrahlen erzeugt werden (Strahlteiler 22), zu dem Punkt, an dem die beiden Teilstrahlen wieder zu einem Lichtstrahl überlagert werden (Strahlteiler 6), wesentlich verlängert.

Es ist möglich, eine Geschwindigkeitsmeßeinrichtung entsprechend der Fig. 2 zu realisieren, bei der der Teilstrahl in einer Lichtleitfaser oder in mehreren zueinander parallelen Lichtleitfaserstücken geführt wird. Die Lichtleitfaserstücke sind an ihren Enden mit Spiegelplatten abgeschlossen. Diese bewirken das Auskoppeln von dem einen und das Einkoppeln in das benachbarte Lichtleitfaserstück. Über solche Geschwindigkeitsmeßeinrichtungen wurde von M.Böhm in dem Vortrag "Achievements and Prospectives of Fiber Gyros auf der Fibre Optics '86 International Conference, London, 29.04.-01.05.1986 berichtet.

Bei den Ausführungsbeispielen nach Fig. 1 und Fig. 2 breiten sich die Teilstrahlen LS1 und LS2 zwischen dem Punkt, in dem sie durch Teilung aus dem Lichtstrahl LS erzeugt werden (Strahlteiler 2, 22, 23), und dem Punkt, an dem sie wieder einander überlagert werden (Strahlteiler 2, 6) in unterschiedlichen Richtungen aus. Bei den angenommenen Ausführungsbeispielen bilden diese Richtungen einen Winkel von 90° miteinander. Andere Winkel sind ebenfalls möglich. Bei der nachfolgend beschriebenen Anordnung nach Fig. 3 hingegen breiten sich die beiden Teilstrahlen LS1 und LS2 parallel zueinander aus. Der Teilstrahl LS wird in einem Strahlteiler 25 wie bei den anderen Ausführungsbeispielen, in zwei Teilstrahlen LS1 und LS2 aufgeteilt. Der Strahlteiler 25 kann beispielsweise in der Technik der integrierten Optik realisiert sein. Danach wird der Teilstrahl LS2 in eine Lichtleitfaser 51 eingekoppelt und gelangt nach dem Durchlaufen der Lichtleitfaser 51 zu einem Strahlteiler 56, der ebenfalls in der Technik der integrierten Optik realisiert ist. Der andere Teilstrahl LS1 gelangt zu einer Anordnung 50, die Lichtleitfasern 12 und Spiegelplatten 10, 11 enthält. Es sind hier mehrere Lichtleitfaserstücke 12 parallel zueinander angeordnet und die Aus/Ein-Kopplung von einem Lichtleitfaserstück in das andere Lichtleitfaserstück erfolgt durch die Spiegelplatten 10 und 11. Der Teilstrahl LS1 gelangt nach dem Durchlaufen der Anordnung 50 zu dem Strahlteiler 56 und wird dort dem anderen Teilstrahl LS2 überlagert. Der durch die Überlagerung der Teilstrahlen LS1 und LS2 erzeugte Lichtstrahl gelangt wie bei den anderen Anordnungen zu einer (nicht dargestellten) Auswerteeinrichtung, in der aus der durch den quadratischen Doppler-Effekt verursachten Phasendifferenz zwischen den beiden Teilstrahlen die inertiale Geschwindigkeit ermittelt wird. Der erste Interferometerarm ist bei dieser Anordnung das Stück zwischen dem Verzweigungspunkt in dem Strahlteiler 25 und dem Überlagerungspunkt im Strahlteiler 56 unter Berücksichtigung des Lichtwegs in der Anordnung 50. Für den zweiten Interferometerarm gilt sinngemäß dasselbe. Der zweite Interferometerarm unterscheidet sich von dem ersten Interferometerarm dadurch, daß die Anordnung 50 durch die Lichtleitfaser 51 ersetzt ist.

Bei den beschriebenen Ausführungsbeispielen wird jeweils ein Lichtstrahl LS in zwei Teilstrahlen LS1 und LS2 aufgeteilt. Daraus ergibt sich zwangsläufig, daß die beiden Teilstrahlen am Verzweigungspunkt gleichphasig sind. Werden die beiden Teilstrahlen in unterschiedlichen Strahlungsquellen erzeugt, dann ist es von Vorteil, die Phasen zwischen den beiden Teilstrahlen so zu regeln, daß sie gleichphasig sind, wenn sie in die Interferometerarme eingekoppelt werden. Ist dies nicht der Fall, dann muß die Phasendifferenz zwischen den Teilstrahlen vor dem Einkoppeln in die Interferometerarme ermittelt und bei der Auswertung berücksichtigt werden.

Bei der Anordnung nach Fig. 3 sind die Lichtwege für die beiden Teilstrahlen $I_1$ und $I_2$ zueinander parallel wie unter a3) angegeben. Bei diesem Ausführungsbeispiel ist die Phasendifferenz zwischen den beiden Teilstrahlen

$$\Delta\phi = \frac{4\pi(l_1 - l_2)}{\lambda} \cdot \frac{v^2}{c^2} \cdot K$$

mit $\lambda$ gleich Lichwellenlänge im Vakuum. K ist ein Korrekturfaktor, den man entweder durch Berechnung oder in besonders vorteilhafter Weise durch Eichung ermitteln kann. In ihn gehen unter anderem geometrische und geographische Parameter wie z. B. Richtungen gegenüber Erdnord und gegen Horizontale und Zahl der Glasfasern ein. Eine praktische Realisierung der Anordnung nach Fig. 3 kann mit folgenden Werten erfolgen: $l_1 = 1m$; $l_2 = 0,1m$; $\lambda = 10^{-6}m$; $K = 1000$.

Die bei der Anordnung nach Fig. 3 verwendeten Lichtleitfasern sind vorzugsweise polarisationserhaltende Monomodefasern.

Sind einer oder beide der Interferometerarme mit Lichtleitfasern realisiert, die eine geschlossene Fläche umschließen, dann entsteht, wie bereits erwähnt bei Rotation zusätzlich eine durch den Sagnac-Effekt bedingte Phasenverschiebung, falls nicht besondere Maßnahmen vorgesehen sind (z. B. "gegensinniges Umlaufen" der von den Lichtleitfasern umschlossenen Flächen). Dieser Fehler muß möglichst klein gehalten werden. Dies erreicht man dadurch, daß man die umschlossene Fläche klein hält. Weiterhin ist es möglich, die durch den Sagnac-Effekt bedingte Phasendifferenz durch eine geeignete Anordnung zu messen und sie bei der Auswertung zur Ermittlung der inertialen Geschwindigkeit rechnerisch zu berücksichtigen.

Wie die Phasendifferenz meßtechnisch ausgewertet werden kann braucht hier nicht im einzelnen erläutert werden, da dies an sich bekannt ist. Es können beispielsweise die Teilstrahlen moduliert werden; es ist möglich, die Phasendifferenz zwischen den Teilstrahlen auf null zu regeln und zur Geschwindigkeitsmessung das Regelsignal auszuwerten.

Einzelheiten hierzu finden sich beispielsweise in der bereits zitierten DE-OS 33 35 708. Eine Phasendifferenz zwischen Teilstrahlen ist auch bei den Einrichtungen zur Messung der Drehgeschwindigkeit auszuwerten, bei der zwei Teilstrahlen, die eine spulenförmig angeordnete Lichtleitfaser gegensinnig durchlaufen, einander überlagert werden. Diese beiden Teilstrahlen entsprechen hinsichtlich der meßtechnischen Auswertung den Teilstrahlen LS1 und LS2. Die Verfahren zur Auswertung der Phasendifferenz bei Drehgeschwindigkeitsmeßeinrichtungen können also auch bei der Geschwindigkeitsmeßeinrichtung zur Messung der inertialen Geschwindigkeit angewandt werden. Dies gilt auch bezüglich einer eventuellen Modulation der beiden Teilstrahlen, die bezüglich der meßtechnischen Auswertung der Phasendifferenz zwischen den beiden Teilstrahlen von Vorteil ist. Beispielsweise wird auf die DE-OS 31 36 688, DE-OS 32 47 014, DE-OS 32 44 010, DE-OS 32 44 113, DE-OS 34 18 288 verwiesen.

Bezüglich weiterer technischen Hintergrunds hinsichtlich der meßtechnischen Realisierung wird auf "Gravitational Wave Detectors using Laser Interferometers and Optical Cavities: Ideas, Principles and Prospects" von R.W.P.Drever and Colleagues in Quantum Optics, Experimental Gravity and Measurement Theory, edited by Pierre Meystre and Marlan 0. Scully (Plenum Publishing Corporation, 1983), Seiten 503 bis 514, und "Interferometric Detectors for Gravitational Radiation" von R.W.P.Drever, California Institute of Technology, Pasadena verwiesen. Nach dem Anmeldetag der Ursprungsanmeldung erfolgte eine Veröffentlichung zu der der Anmeldung zugrundeliegenden Theorie durch M. Böhm im Jahrbuch 1985 der DGLR, Seiten 96-1 bis 96-22 unter dem Titel "Zur Bedeutung des quadratischen Doppler-Effektes für Raumfahrt und Astrophysik."

Die Beschreibung erfolgte anhand von Beispielen, bei denen Lichtwellen verwendet werden. Benutzt man andere elektromagnetische Wellen, dann ist es fachmännisches Wissen, die beschriebenen Beispiele so abzuwandeln, daß sie für solche anderen Wellen geeignet sind.

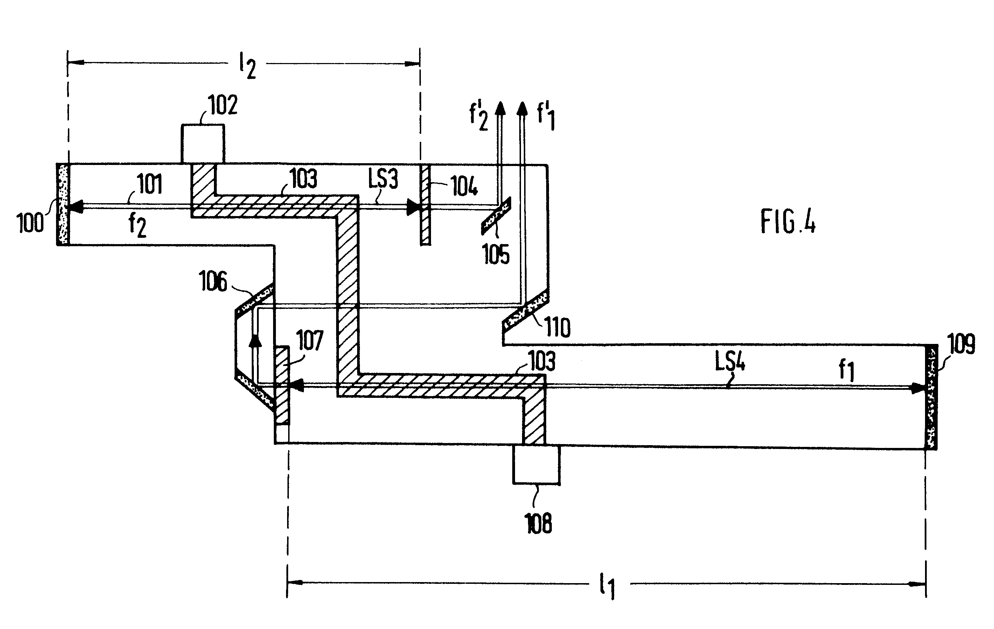

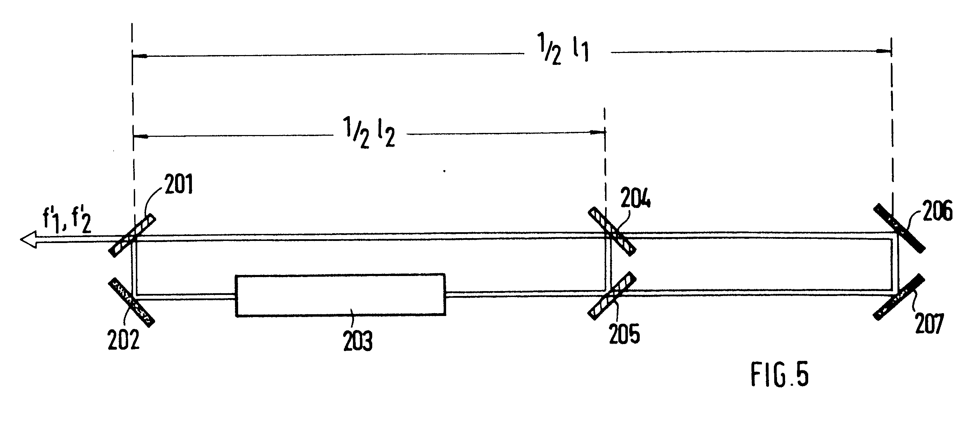

Nachfolgend werden anhand der Figuren 4 und 5 zwei weitere Ausführungsbeispiele beschrieben. Die Lichtstrahlen, die zur Messung verwendet werden, breiten sich hier in Laserresonanzräumen aus. Bei den Ausführungsbeispielen, breiten sich, ähnlich wie bei dem Ausführungsbeispiel nach Fig. 3, zwei Lichtstrahlen LS3, LS4 zueinander parallel aus. Diese beiden Lichtstrahlen erhält man jedoch nicht durch Teilung eines einzigen Lichtstrahls. Es handelt sich hier um Lichtstrahlen, die sich jeweils in einem Resonanzraum eines einzigen Lasers ausbreiten. Dieser Laser weist zwei voneinander unterschiedliche Resonanzräume auf.

Bei dem Ausführungsbeispiel nach Fig. 4 wird ein Gaslaser verwendet. Gaslaser an sich sind allgemein bekannt, so daß auf ihren prinzipiellen Aufbau und ihre Funktionsweise nicht näher einzugehen ist.

Gaslaser werden auch bei Ringlaserkreiseln angewandt, die aus der Literatur ebenfalls allgemein bekannt sind. Beispielsweise wird auf die DE-A1-29 49 412 und die EP-A2-0 103 683 verwiesen. Bei Ringlaserkreiseln durchlaufen zwei Laserstrahlen einen dreieckförmigen Resonatorraum in zueinander entgegengesetzten Richtungen. Ist die Drehbewegung null, dann haben die beiden Laserstrahlen dieselbe Frequenz. Ist die Drehgeschwindigkeit ungleich null, dann haben die beiden Laserstrahlen unterschiedliche Frequenzen, weil die Längen der Resonanzräume für die beiden Laserstrahlen infolge der Drehbewegung ungleich lang sind. Die beiden Laserstrahlen werden aus dem Resonatorraum ausgekoppelt und einer Auswerteeinrichtung zugeführt. Die Differenz zwischen den Frequenzen der beiden Laserstrahlen ist proportional der Drehgeschwindigkeit und folglich kann durch Auswertung der Frequenzdifferenz die Drehgeschwindigkeit ermittelt werden. Hierzu gibt es mehrere bekannte Verfahren.

Bei der Meßeinrichtung nach Fig. 4 ist kein dreieckförmiger Resonanzraum vorhanden sondern es sind zwei lineare Resonanzräume vorhanden. Beide Resonanzräume sind unterschiedlich lang ($l_1$, $l_2$) und sind vorzugsweise zueinander parallel. Mit dieser Geschwindigkeitsmeßeinrichtung wird diejenige Komponente der inertialen Geschwindigkeit gemessen, die in die Richtung der Längsausdehnung des längeren der Resonanzräume zeigt. Die Resonanzfrequenz des Laserstrahls im ersten Resonanzraum mit der Länge $l_1$ ist $f_1$, wenn die relevante Komponente der inertialen Geschwindigkeit gleich null ist. Die Resonanzfrequenz des Laserstrahls im zweiten Resonanzraum mit der Länge $l_2$ ist $f_2$.

Bewegt sich die Geschwindigkeitsmeßeinrichtung mit der Geschwindigkeit v in der Richtung der Längsausdehnung der Resonanzräume, dann werden die Längen verändert und zwar zu

$$l_1{}' = \frac{l_1}{1 - \frac{v^2}{c^2}} \qquad\qquad (1)$$

$$\text{und} \quad l_2{}' = \frac{l_2}{1 - \frac{v^2}{c^2}} \qquad\qquad (2)$$

mit c gleich Lichtgeschwindigkeit im Vakuum. Dementsprechend ändern sich auch die Frequenzen der Laserstrahlen und zwar zu

$$f_1{}' = f_1 \left(1 - \frac{v^2}{c^2}\right) \qquad\qquad (3)$$

$$\text{und} \quad f_2{}' = f_2 \left(1 - \frac{v^2}{c^2}\right) \qquad\qquad (4)$$

6

Die Differenz zwischen den Frequenzen der Laserstrahlen ist im Ruhezustand:

$$\Delta f = f_2 - f_1; \quad \dots (5)$$

bei Ausbreitung der Geschwindigkeitsmeßeinrichtung mit der Geschwindigkeit v:

$$\Delta f' = \Delta f_0 \left(1 - \frac{v^2}{c^2}\right) \qquad (6).$$

Daraus kann die Geschwindigkeitskomponente v berechnet werden.

Da wie beim Ringlaserkreisel die Differenz zwischen den Frequenzen der beiden ausgekoppelten Laserstrahlen gemessen werden muß, können zur Bestimmung von $\Delta f'$ alle von dort bekannten Auswerteverfahren angewandt werden. Sie werden deshalb hier nicht näher erläutert. Lediglich die Berechnung von v aus dem ermittelten Wert für $\Delta f'$ erfolgt nach einer anderen Gleichung.

Bei der Dimensionierung der Resonanzlängen muß darauf geachtet werden, daß die auszuwertenden Differenzfrequenzen genügend tief liegen, um ohne allzu großen Aufwand ausgewertet zu werden. $\Delta f'$ liege im Bereich von 300 MHz. Daraus ergeben sich für Neon Frequenzen $f_1 = f_0 + n \bullet 300$ MHz und $f_2 = f_0$ bei Resonanzlängen von $l_1 = 1$m und $l_2 = 0{,}1$m.

Nachfolgend wird auf die Realisierung im Einzelnen näher eingegangen. Wie bei Ringlaserkreiseln ist bei der Anordnung nach Fig. 4 in einem Block aus glaskeramischem Material ein Hohlraum 103 vorgesehen, in dem sich das anzuregende Gas befindet. Zur Anregung sind zwei Anoden 102 und 108 sowie eine Kathode vorgesehen. Die Kathode ist zur Verbesserung der Übersichtlichkeit in der Zeichnung weggelassen. Ein Bereich des Hohlraums 103 liegt zwischen zwei Spiegeln 100 und 104, welche den zweiten Resonatorraum des Lasers mit der Länge $l_2$ bilden. Der Laserstrahl zwischen diesem Spiegelpaar hat im Ruhezustand die Frequenz $f_2$. Der eine Spiegel des Spiegelpaares 100, 104 ist halbdurchlässig (in der Zeichnung der rechte Spiegel 104).

Ein weiterer Bereich des Hohlraums 103 liegt zwischen zwei Spiegeln 107 und 109, welche den ersten Resonatorraum des Lasers mit der Länge $l_1$ bilden. Der Laserstrahl zwischen diesem Spiegelpaar hat im Ruhezustand die Frequenz $f_1$. Der eine Spiegel des Spiegelpaares 107, 109 ist halbdurchlässig (in der Zeichnung der linke Spiegel 107).

Der Anteil des Laserstrahls mit der Frequenz $f_2$, der von dem halbdurchlässigen Spiegel 104 durchgelassen wird, wird von einem Umlenkspiegel 105 auf die (nicht dargestellte) Auswerteeinrichtung gelenkt. Der Anteil des Laserstrahls mit der Frequenz $f_1$, der von dem halbdurchlässigen Spiegel 107 durchgelassen wird, wird von einem Umlenkprisma 106 und einem Umlenkspiegel 107 ebenfalls auf die Auswerteeinrichtung gelenkt. Dort erfolgt, wie oben erwähnt, die Auswertung. Bewegt sich die Meßeinrichtung, dann wird aus der Frequenz $f_1$ die Frequenz $f_1'$ und aus der Frequenz $f_2$ die Frequenz $f_2'$.

Bei dem Ausführungsbeispiel nach Fig. 5 wird anstelle des Gaslasers ein Festkörperlaser verwendet. Es ist ein laseraktives Medium 203 vorgesehen, dessen Stirnflächen nicht verspiegelt sind, so daß durch beide Stirnflächen Laserstrahlung in das Medium aus-und eintreten kann. Der in der Zeichnung auf der rechten Seite austretende Laserstrahl trifft auf einen gegen die Strahlrichtung um 45° geneigten halbdurchlässigen Spiegel 205 und ein Teil von diesem Laserstrahl wird durch diesen auf einen weiteren halbdurchlässigen Spiegel 204 gerichtet. Der von dem ersten halbdurchlässigen Spiegel 205 durchgelassene Anteil des Laserstrahls wird von zwei Spiegeln 207 und 206 zu dem weiteren halbdurchlässigen Spiegel 204 gelenkt und von diesem zum Teil durchgelassen. Der von dem teildurchlässigen Spiegel 204 abgelenkte Laserstrahl und der von diesem durchgelassene Laserstrahl breiten sich auf gleichem Weg zu einem dritten teildurchlässigen Spiegel 201 aus. Die von diesem durchgelassene Anteile der beiden auf ihn treffenden Laserstrahlen mit den Frequenzen $f_1$, $f_2$ oder $f_1'$, $f_2'$ gelangen zur Auswerteeinrichtung. Die von diesem halbdurchlässigen Spiegel abgelenkten Laserstrahlen werden über einen weiteren Spiegel 202 zu dem laseraktiven Medium 203 geleitet.

Geometrisch gesehen befinden sich die Spiegel 201, 202, 205 und 204 an den Ecken eines Rechteckes. Die Strecken zwischen den Spiegeln 201 und 202 sowie zwischen den Spiegeln 205 und 204 sind verglichen zu den Strecken zwischen den Spiegelpaaren 201/204 und 202/205 sehr klein. Die Spiegel 206 und 207 befinden sich an den Ecken eines Rechtecks, das man aus dem durch die Spiegel 201, 202, 204, 205 gebildeten erhält, wenn man dessen lange Seiten nach rechts verlängert. Diese beiden Rechtecke bilden zwei rechteckförmige Resonatorräume.

Die lange Seite des kleineren Resonatorraums hat die Länge 1/2 $l_2$; die lange Seite des größeren Resonatorraums die Länge 1/2 $l_1$. Diese $l_1$ und $l_2$ sind die $l_1$ und $l_2$ in den obigen Gleichungen (1) und (2). Somit kann auch mit dieser Anordnung aus den Frequenzen $f_1'$ und $f_2'$ der Laserstrahlen, die von dem halbdurchlässigen Spiegel 201 zur Auswerteeinrichtung durchgelassen werden, die Komponente der inertialen Geschwindigkeit in Richtung der langen Seiten der Rechtecke gemessen werden.

Die kurzen Rechtecke müssen möglichst kurz gewählt werden, da sonst zu der Frequenzänderung, die durch den quadratischen Dopplereffekt bedingt ist und zur Messung der inertialen Geschwindigkeit verwendet wird, eine durch den Sagnac-Effekt bedingte Frequenzänderung hinzukommt, welche zur Drehgeschwindigkeit proportional ist. Für sehr große Meßgenauigkeiten ist es möglich, zweier solcher Anordnungen vorzusehen. Die Laserstrahlen müssen dann die beiden Anordnungen mit entgegengesetztem Richtungssinn durchlaufen. Dann kann die durch den Sagnac-Effekt bedingte Frequenzänderung kompensiert oder bei der Auswertung berücksichtigt werden.

Mit den oben beschriebenen Geschwindigkeitsmeßeinrichtungen wird eine Komponente v der inertialen Geschwindigkeit gemessen. Will man die resultierende inertiale Geschwindigkeit messen, dann sind drei solcher Meßeinrichtungen erforderlich, mit denen jeweils in unterschiedlichen Raumrichtungen eine Geschwindigkeitskomponente gemessen wird. Die Raumrichtungen stehen vorzugsweise aufeinander senkrecht. Aus den so gemessenen Geschwindigkeitskomponenten kann in an sich bekannter Weise die tatsächliche Geschwindigkeit gemessen werden. Es ist möglich, die Auswerteeinrichtung, in der die Phasendifferenzen (Fig. 1-3) oder Frequenz differenzen (Fig. 4, 5) zwischen den Lichtstrahlen ermittelt und ausgewertet werden, nur einmal vorzusehen und die Messungen und Auswertungen im Zeitmultiplex durchzuführen. Dadurch kann der erforderliche Aufwand reduziert werden.

**Ansprüche**

1. Geschwindigkeitsmeßeinrichtung,

**dadurch gekennzeichnet,** daß zwei unterschiedlich lange Wegstrecken ($l_1$, $l_2$) vorgesehen sind, auf denen sich jeweils eine elektromagnetische Welle (LS1, LS2) ausbreitet und daß nach dem Durchlaufen der beiden Wegstrecken aus der durch den quadratischen Dopplereffekt bedingten geschwindigkeitsproportionalen Phasendifferenz zwischen den beiden Wellen die Geschwindigkeitskomponente der inertialen Geschwindigkeit in Richtung der längeren der beiden Wegstrecken ermittelt wird.

2. Geschwindigkeitsmeßeinrichtung, dadurch gekennzeichnet, daß zwei gleich lange Wegstrecken vorgesehen sind, wobei die beiden Wegstrecken Winkel ungleich 90° oder ganzzahlige Vielfache von 90° einschließen, daß sich auf diesen beiden Wegstrecken jeweils eine elektromagnetische Welle ausbreitet und daß nach dem Durchlaufen der beiden Wegstrecken aus der durch den quadratischen Doppler-Effekt bedingten geschwindigkeitsproportionalen Phasendifferenz zwischen den beiden Wellen die Geschwindigkeitskomponente der inertialen Geschwindigkeit in Richtung der längeren der beiden Wegstrecken ermittelt wird.

3. Geschwindigkeitsmeßeinrichtung nach Anspruch 1 oder 2, dadurch gekennzeichnet, daß die beiden Wellen am Anfang der beiden Wegstrecken gleichphasig sind.

4. Geschwindigkeitsmeßeinrichtung nach Anspruch 1 oder 2, dadurch gekennzeichnet, daß zwischen beiden Wellen vor dem Einkoppeln in die beiden Wegstrecken eine beliebige jedoch bekannte Phasendifferenz vorhanden ist, welche bei der Auswertung berücksichtigt wird.

5. Geschwindigkeitsmeßeinrichtung nach Anspruch 1 oder einem der Ansprüche 3 bis 4, dadurch gekennzeichnet, daß die beiden Wegstrecken die beiden Arme eines Interferometers sind.

6. Geschwindigkeitsmeßeinrichtung nach Anspruch 5, dadurch gekennzeichnet, daß die beiden Arme aufeinander senkrecht stehen.

7. Geschwindigkeitsmeßeinrichtung nach Anspruch 5, dadurch gekennzeichnet, daß die beiden Arme zueinander parallel sind.

8. Geschwindigkeitsmeßeinrichtung nach einem der vorangehenden Ansprüche, dadurch gekennzeichnet, daß anstatt der Phasendifferenzen zwischen den Teilstrahlen die Differenz der Ankunftszeiten ausgewertet wird.

9. Geschwindigkeitsmeßeinrichtung,

**dadurch gekennzeichnet**, daß ein Laser mit zwei Resonatorräumen (100, 104; 107, 109) vorgesehen ist, daß die Wegstrecken ($l_1$, $l_2$) für das Licht in den Resonatoren in der Längsrichtung unterschiedlich lang sind, daß sich -bedingt durch den quadratischen Doppler-Effekt -die Resonatorfrequenzen ($f_1'$, $f_2'$) in den beiden Resonatorräumen geschwindigkeitsabhängig um unterschiedliche Werte ändern, und daß aus der Differenz der beiden geschwindigkeitsabhängigen Resonanzfrequenzen die Geschwindigkeitskomponente der inertialen Geschwindigkeit in Richtung der Längsausdehnung der Resonatorräume ermittelt wird.

10. Geschwindigkeitsmeßeinrichtung nach Anspruch 9, dadurch gekennzeichnet, daß die Richtungen der Längsausdehnungen der Resonatorräume zueinander parallel sind.

FIG.1

FIG.2

FIG.3

FIG.3

M. Böhm 40X/4·
6. 6. 86

FIG.4

0 220 378

M. Böhm 40x/

$\frac{1}{2}\,l_1$

$\frac{1}{2}\,l_2$

201

f'₁, f'₂  →

204

206

202

203

205

207

FIG.5

0 220 378

M. Böhm 40)
6·6·86

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | DE-A-1 523 173 (FRICKE)<br><br>* Seite 3, Zeile 26 - Seite 4, Zeile 4; Figure 4 *<br><br>--- | 1-3,5, 6 | G 01 P 3/50 |
| A,D | DE-A-3 335 708 (SEL)<br>* Seite 6, Zeile 16 - Seite 7, Zeile 14; Figuren 2,5 *<br><br>--- | 1,2,7 | |
| A | DE-A-2 500 376 (BRÖSZKE)<br>* Insgesamt *<br><br>--- | 1,2,7 | |
| A,D | DE-A-3 244 010 (SEL)<br>* Seite 4, Zeile 3 - Seite 5, Zeile 25; Figure 1 *<br><br>--- | 1-4 | |
| A,D | EP-A-0 103 683 (HONEYWELL)<br>* Seite 1, Zeilen 1-26; Seite 12, Zeilen 3-8; Figuren 1a, 1b,4 *<br><br>----- | 3,4,9 | RECHERCHIERTE SACHGEBIETE (Int. Cl.4)<br><br>G 01 P<br>G 01 S<br>G 01 C |

Der vorliegende Recherchenbericht wurde für alle Patentansprüche erstellt.

| Recherchenort | Abschlußdatum der Recherche | Prüfer |
|---|---|---|
| DEN HAAG | 19-01-1987 | HANSEN P. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82